# EUROPÄISCHE PATENTSCHRIFT

(11) **EP 2 189 908 B1**
(45) Veröffentlichungstag und Bekanntmachung des Hinweises auf die Patenterteilung: **11.04.2012**
(21) Anmeldenummer: 08019407.9
(22) Anmeldetag: 06.11.2008
(51) Int. Cl.: G06F 11/34

(54) **Verfahren und Vorrichtung zum Bestimmen einer Kenngröße eines IT-Systems**
Device and procedure to determine an indicator in an IT system
Procédé et dispositif destinés à la détermination d'une grandeur de référence d'un système informatique

(43) Veröffentlichungstag der Anmeldung: 26.05.2010
(73) Patentinhaber: ServiceTrace e.K., 64287 Darmstadt (DE)
(72) Erfinder: Duus, Markus, 64287 Darmstadt (DE)
(74) Vertreter: Lemcke, Brommer & Partner

(56) Entgegenhaltungen:
- WO-A-98/41917
- US-A- 5 511 185

## Beschreibung

Die vorliegende Erfindung betrifft ein Verfahren nach dem Oberbegriff des Patentanspruchs 1 zum Bestimmen der Qualität und/oder Leistungsfähigkeit von IT-Systemen auf Applikationsebene, insbesondere während des Betriebs, wobei wenigstens eine Applikation auf mindestens einem Rechner des Systems gestartet wird.

Weiterhin betrifft die Erfindung ein Computerprogrammprodukt in Form von auf einem Datenträger gespeicherten oder speicherbaren Programmanweisungen, bei deren Ausführung auf einer geeigneten Rechnerarchitektur das erfindungsgemäße Verfahren durchgeführt wird.

Schließlich betrifft die Erfindung auch eine softwarebasierte Vorrichtung nach dem Oberbegriff des Patentanspruchs 13 zum Bestimmen der Qualität und/oder Leistungsfähigkeit von IT-Systemen auf Applikationsebene, insbesondere während des Betriebs, wobei die Vorrichtung insbesondere unter Verwendung des erfindungsgemäßen Computerprogrammprodukts implementiert ist, wobei die Vorrichtung dazu ausgebildet ist, wenigstens eine Applikation auf mindestens einem Rechner des Systems zu starten.

Zur Überwachung der Servicequalität in Rechnersystemen (IT-Systemen) ist bekannt, Applikationen oder Anwendungen in Form von Computerprogrammen, auf welchen die entsprechenden Services basieren, definiert zu starten und dann diejenige Zeit zu ermitteln, die vergeht, bis die jeweilige Applikation einen bestimmten Zustand erreicht hat, beispielsweise durch Tätigen von Eingaben, Befehlen oder dergleichen.

Ein ähnliches Verfahren ist aus der US-A 5,511,185 bekannt, wonach als Kenngröße diejenige Zeit ermittelt wird, die eine Applikation braucht, um einen bestimmten Befehl auszuführen. Außerdem offenbart die genannte Druckschrift das Auffinden so genannter Icons mittels einer Suche nach festen, bekannten Pixelwert-Änderungen insbesondere im Rand- oder Konturbereich der Icons.

Um dabei die für einen Benutzer tatsächlich wahrnehmbare Servicequalität zu bestimmten, erfolgt das Starten der betreffenden Applikationen regelmäßig durch eine simulierte Mauseingabe auf/in einer Anzeigeeinheit eines betreffenden Rechners, das heißt auf dem Bildschirm bzw. direkt in der entsprechenden Grafikkarte. Dazu ist es erforderlich, die betreffenden Applikationen grafisch zu identifizieren, was anhand von so genannten Icons oder Piktogrammen geschieht, welche den Applikationen regelmäßig zugeordnet sind.

Nach dem Stand der Technik wird dazu auf eine Art der Bilderkennung zurückgegriffen, welche die betreffenden Piktogramme durch Suchen nach einer Anordnung von Bildpunkten oder Pixeln mit vorbestimmten Farbwerten, insbesondere RGB-Werten, detektiert. Hierbei hat sich als nachteilig erwiesen, dass sich einerseits die genannten Bildpunktwerte mit der Zeit ändern können, beispielsweise aufgrund einer Treiberänderung oder durch Altern der eingesetzten Grafikkarte, und dass andererseits eine Abhängigkeit der Qualität der Bilderkennung von der verwendeten Auflösung der Grafikkarte sowie von der zugrunde liegenden Rechnerplattform (Linux, Macintosh, Windows, ...) existiert, so dass sich die Bilderkennung und damit das gesamte Überwachungsverfahren als relativ langsam, unsicher und fehleranfällig darstellt.

Der Erfindung liegt die Aufgabe zugrunde, ein Verfahren der eingangs genannten Art sowie ein zu dessen Implementierung verwendbares Computerprogrammprodukt bzw. eine entsprechende softwarebasierte Vorrichtung dahingehend weiterzuentwickeln, dass eine schnelle, sichere, farb- und auflösungsunabhängige Überwachung prinzipiell aller im Markt befindlichen Applikationen auf beliebigen Rechnerplattformen möglich ist.

Diese Aufgabe wird gelöst durch ein Verfahren mit den Merkmalen des Patentanspruchs 1, durch ein Computerprogrammprodukt mit den Merkmalen des Patentanspruchs 12 sowie durch eine softwarebasierte Vorrichtung mit den Merkmalen des Patentanspruchs 13.

Vorteilhafte Weiterbildungen der Erfindung sind jeweils Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist ein Verfahren zum Bestimmen der Qualität und/oder Leistungsfähigkeit von IT-Systemen auf Applikationsebene, insbesondere während des Betriebs, wobei wenigstens eine Applikation auf mindestens einem Rechner des Systems gestartet wird, dadurch gekennzeichnet, dass eine Zeit zwischen dem Starten der Applikation und dem Erreichen eines bestimmten Applikationszustands, wie deren tatsächlicher Verfügbarkeit für einen Nutzer, ermittelt und als Maß für die Qualität und/oder Leistungsfähigkeit des IT-Systems ausgegeben oder ausgewertet wird, wobei zumindest das Starten der Applikation automatisierbar durch einen Software-Roboter erfolgt, welcher die Applikation grafisch anhand eines ihr zugeordneten ersten Piktogramms identifiziert und durch Anwahl einer dem ersten Piktogramm zugeordneten Verknüpfung insbesondere per Mauseingabe startet, wodurch zugleich die Messung der Zeit ausgelöst wird, wobei die Identifizierung mittels einer konturabhängigen Mustererkennung erfolgt, zu welchem Zweck das erste Piktogramm zunächst in eine Kontur- oder Kantenbilddarstellung umgewandelt wird, unter dessen Verwendung anschließend die Mustererkennung durchgeführt wird. Dabei wird erfindungsgemäß das Erreichen des bestimmten Applikationszustands, z. B. das Öffnen eines bestimmten Anwendungsfensters oder das Öffnen/Speichern einer Datei, ebenfalls grafisch anhand eines ihm zugeordneten zweiten Piktogramms erkannt, wobei die Identifizierung des zweiten Piktogramms ebenfalls mittels einer konturabhängigen Mustererkennung durch den Software-Roboter erfolgt, wobei nach erfolgter Identifizierung des zweiten Piktogramms die Messung der Zeit durch den Software-Roboter gestoppt wird.

Das genannte zweite Piktogramm kann im Zuge einer Weiterbildung des erfindungsgemäßen Verfahrens dem ersten Piktogramm im Wesentlichen entsprechen. Der Begriff "im Wesentlichen" bedeutet in diesem Zusammenhang, dass die grundlegende, aus dem zweiten Piktogramm extrahierbare Kontur größtenteils derjenigen des ersten Piktogramms entspricht, während sich beispielsweise die Größe des Piktogramms, dessen farbliche Ausgestaltung etc. geändert haben können, ohne dass dies zu Problemen bei der vorliegenden Mustererkennung führen würde, da auch die Identifizierung des zweiten Piktogramms mittels der genannten konturabhängigen Mustererkennung erfolgt.

Ein erfindungsgemäßes Computerprogrammprodukt umfasst auf einem Datenträger gespeicherte oder speicherbare Programmanweisungen, bei deren Ausführung auf einer geeigneten Rechnerarchitektur das erfindungsgemäße Verfahren durchgeführt wird, wobei die Programmanweisungen insbesondere den Software-Roboter programmtechnisch definieren.

Eine erfindungsgemäße softwarebasierte Vorrichtung zum Bestimmen der Qualität und/oder Leistungsfähigkeit von IT-Systemen auf Applikationsebene, insbesondere während des Betriebs, wobei die Vorrichtung insbesondere unter Verwendung des erfindungsgemäßen Computerprogrammprodukts implementiert ist, wobei die Vorrichtung dazu ausgebildet ist, wenigstens eine Applikation auf mindestens einem Rechner des Systems zu starten, zeichnet sich dadurch aus, dass die Vorrichtung weiterhin dazu ausgebildet ist, eine Zeit zwischen dem Starten der Applikation und dem Erreichen eines bestimmten Applikationszustands, wie deren tatsächlicher Verfügbarkeit für einen Nutzer, zu ermitteln und als Maß für die Qualität und/oder Leistungsfähigkeit des IT-Systems auszugeben oder für eine entsprechende Auswertung verfügbar zu machen, wobei die Vorrichtung einen Software-Roboter zum automatisierbaren Starten der Applikation und der Zeitmessung umfasst, welcher Software-Roboter dazu ausgebildet ist, die Applikation grafisch anhand eines ihr zugeordneten Piktogramms zu identifizieren und durch Anwahl einer dem Piktogramm zugeordneten Verknüpfung insbesondere per Mauseingabe zu starten, wodurch zugleich die Messung der Zeit auslösbar ist, wobei für die Identifizierung eine konturabhängige Mustererkennung durch den Software-Roboter implementiert ist, welche die Umwandlung des ersten Piktogramms in eine Kontur- oder Kantenbilddarstellung umfasst, unter dessen Verwendung anschließend die Mustererkennung durchführbar ist, welcher Software-Roboter weiterhin dazu ausgebildet ist, das Erreichen des bestimmten Applikationszustands grafisch anhand eines dem Applikationszustand zugeordneten zweiten Piktogramms zu erkennen, wobei auch für die Identifizierung des zweiten Piktogramms eine konturabhängige Mustererkennung durch den Software-Roboter implementiert ist, und nach erfolgter Identifizierung des zweiten Piktogramms die Messung der Zeit zu stoppen.

Ein Grundgedanke der vorliegenden Erfindung sieht demnach vor, das Starten der wenigstens einen Applikation, deren Servicequalität überwacht werden soll, durch einen so genannten Software-Roboter, d. h. ein weitgehend autonom agierendes programmtechnisches Werkzeug unter Verwendung einer konturabhängigen Mustererkennung durchzuführen, um auf diese Weise die weiter oben beschriebenen Nachteile des Standes der Technik zu vermeiden.

Die genannte konturabhängige Mustererkennung ist auch als "Pattern Matching" bekannt und basiert grundsätzlich darauf, dass nicht bestimmte Pixelwerte (RGB-Werte) gesucht werden, sondern dass ein zu identifiziertes Piktogramm zunächst in eine Kontur- oder Kantenbilddarstellung umgewandelt wird, unter dessen Verwendung anschließend die Mustererkennung durchgeführt wird. Auf diese Weise ist die Mustererkennung von Art und Alter der verwendeten Grafikkarte, den eingesetzten Treibern und der existierenden Rechnerplattform im Wesentlichen unabhängig und ermöglicht einen schnellen und sicheren Verfahrensablauf.

Eine andere Weiterbildung des erfindungsgemäßen Verfahrens sieht vor, dass der Software-Roboter mit einem ersten Software-Modul zusammenwirkt, wobei letzteres dazu ausgebildet ist, die Anzeige insbesondere visueller Elemente in Form von so genannten Pop-ups oder allgemein andere, störende Programmführungen zu unterbinden, wenn diese von anderen Computerprogrammen als der gestarteten und überwachten Applikation stammen bzw. initiiert werden.

Auf diese Weise soll verhindert werden, dass durch das Anzeigen derartiger Pop-ups bzw. allgemein das Ausführen weiterer Programme eine Verfälschung der vorzunehmenden Kenngrößenbestimmung hervorgerufen wird, da beispielsweise das Anzeigen von Pop-ups regelmäßig zu einer Verlängerung der im Rahmen des erfindungsgemäßen Verfahrens ermittelten Zeit als Grundlage der Kenngrößenbestimmung führt.

In diesem Zusammenhang sieht eine bevorzugte Weiterbildung des erfindungsgemäßen Verfahrens vor, dass auch die Pop-Ups mittels eines Bilderkennungsverfahrens identifiziert und entsprechend geblockt werden. Auch bei dem vorstehend genannten Bilderkennungsverfahren kann es sich vorzugsweise um eine konturabhängige Mustererkennung handeln.

Um das grafische Identifizieren zumindest der zu startenden Applikation und nachfolgend entsprechend auch des bestimmten Applikationszustands zu beschleunigen, sieht eine andere Weiterbildung des erfindungsgemäßen Verfahrens vor, dass die Mustererkennung anhand einer vorbekannten Position des Piktogramms in einem vorgegebenen Bereich einer Anzeigeeinheit des Rechners, wie einem Bildschirm bzw. einer Grafikkarte durchgeführt wird, wobei dieser Bereich zweckmäßigerweise gegenüber einem Gesamtanzeigebereich der Anzeigeeinheit beschränkt ist.

Beispielsweise kann ein Benutzer durch Mauseingabe einen bestimmten Bildschirmausschnitt festlegen, in dem sich das betreffende Piktogramm befindet, so dass die Mustererkennung zunächst auf diesen vorgegebenen Bereich beschränkt durchgeführt wird und entsprechend schneller abläuft.

Allerdings kann es in der Praxis vorkommen, dass ein zu suchendes Piktogramm seine Position auf bzw. in der Anzeigeeinheit des Rechners ändert, beispielsweise weil es von einem Nutzer verschoben wurde. In diesem Fall führt die auf einem vorgegebenen Bereich beschränkte Suche bei der Mustererkennung zu einem Nichterkennen des Piktogramms an der vorbekannten Position. In diesem Zusammenhang sieht eine entsprechende Weiterbildung des erfindungsgemäßen Verfahrens vor, dass dann die Suche bzw, die Mustererkennung vorzugsweise heuristisch über den Restbereich der Anzeigeeinheit des Rechners durchgeführt wird, wobei insbesondere aus dem Bereich von Datenbanken bekannte Suchverfahren zum Einsatz kommen können, bei denen der Restbereich der Anzeigeeinheit wiederum in Unterbereiche unterteilt und anschließend bereichsweise durchsucht wird, wie dem Fachmann an sich bekannt ist.

Wird eine derartige heuristische Piktogrammsuche erfolgreich abgeschlossen, wird in Weiterbildung des erfindungsgemäßen Verfahrens die ermittelte neue Position des Piktogramms für eine nachfolgende Mustererkennung desselben Piktogramms gespeichert.

Wieder eine andere Weiterbildung des erfindungsgemäßen Verfahrens sieht vor, dass der Software-Roboter nach Art eines so genannten Workflows eine Anzahl von Applikationen in einer vorbestimmten Abfolge startet und dabei optional zum Erreichen des bestimmten Applikationszustands in den gestarteten Applikationen vorbestimmte Eingaben und/oder Anweisungen tätigt, um beispielsweise das Öffnen oder Speichern einer Datei zu veranlassen, ein bestimmtes Formular auszufüllen oder dergleichen. Diese Abläufe können dabei insbesondere regel- oder routinemäßig durchgeführt werden, beispielsweise stündlich, täglich oder wöchentlich. Dabei wird die Qualität oder Leistungsfähigkeit des IT-Systems bestimmt und protokolliert.

Eine andere Weiterbildung des erfindungsgemäßen Verfahrens sieht vor, dass der Software-Roboter nach Maßgabe von Skriptanweisungen handelt, wobei das entsprechende Skript, welches die Skriptanweisungen enthält, unter Verwendung eines zweiten Software-Moduls erzeugt wird, welches nach Art eines grafischen Skript-Editors arbeitet. Auf diese Weise ist es auch Nutzern ohne Programmiererfahrung möglich, insbesondere durch einfaches Drag-and-Drop am Bildschirm des Rechners Skripts zur Steuerung des Software-Roboters zu erstellen. Derartige Skripts legen insbesondere fest, welche Applikation wann gestartet wird, welche Eingaben in den Applikationen zu veranlassen sind und welche Timer zur Zeitmessung zu initialisieren, zu aktivieren und zu stoppen sind, wenn Applikationen gestartet bzw. bestimmte Applikationszustände erreicht werden.

Der genannte grafische Skript-Editor ermöglicht auch das einfache Festlegen zu suchender bzw. zu erkennender Piktogramme, indem - wie bereits erwähnt - einfach per Mauseingabe (Ziehen und Klicken) ein Anzeigebereich definiert wird, in dem sich das betreffende Piktogramm gerade befindet.

Das zweite Software-Modul überträgt alle durch einen Nutzer am Bildschirm bzw. an Eingabegeräten des Rechners (Maus, Tastatur, ...) vorgenommenen Eingaben in Skriptanweisungen, welche anschließend zur Steuerung des Software-Roboters verwendet werden.

Eine wieder andere Weiterbildung des erfindungsgemäßen Verfahrens sieht vor, dass der Software-Roboter mit einem dritten Software-Modul zusammenwirkt, welches dazu ausgebildet ist, eine insbesondere dynamische Anpassung von Einflussgrößen der Mustererkennung vorzunehmen. Eine derartige Anpassung dient dazu, eine gewisse, beabsichtigte Unschärfe bei der Mustererkennung zuzulassen, und diese trägt insbesondere dazu bei, dass im Rahmen der vorliegenden Erfindung die gesuchten Piktogramme unabhängig von einer Auflösung oder Farbtiefe der vorhandenen Anzeigeeinheit zuverlässig erkannt werden.

Die genannte dynamische Anpassung der Einflussgrößen der Mustererkennung ist insbesondere dann sinnvoll, wenn sich während des Betriebs gewisse Eigenschaften der Anzeigeeinheit ändern, beispielsweise durch Verstellen der Auflösung und/oder Farbtiefe oder dergleichen.

Betreffend die erfindungsgemäße softwarebasierte Vorrichtung sieht eine erste Weiterbildung der Erfindung vor, dass die Vorrichtung dezentral auf wenigstens einem zu überwachenden Rechner installiert ist, wobei sich ein derartiger Systemaufbau insbesondere für größere Lokationen eignet.

Entsprechend sieht eine alternative Weiterbildung der erfindungsgemäßen Vorrichtung vor, dass diese zentral auf wenigstens einem übergeordneten Rechner, beispielsweise innerhalb eines Rechenzentrums, installiert ist, der mit wenigstens einem zu überwachenden Rechner in Kommunikationsverbindung steht. Ein derartiger Systemaufbau eignet sich insbesondere für kleinere Lokationen.

Wie der Fachmann erkennt, ist jedoch auch eine Mischform aus den beiden oben genannten Ausgestaltungen der erfindungsgemäßen Vorrichtung möglich und realisierbar.

Die vorliegende Erfindung ermöglicht aufgrund ihrer gegenüber vorbekannten Überwachungssystemen verbesserten Leistungsfähigkeit eine verbesserte Qualitätsüberwachung von IT-Systemen auf Applikationsebene, insbesondere eine Vorab-Überprüfung von IT-Systemlandschaften auf End-to-end-Basis vor einem Produktivstart.

Durch das verbesserte Erkennungsverfahren wird eine automatische Erstellung von Service Level Agreement (SLA)-Reports, zu deutsch: Dienstgütevereinbarungen (DGV), für im Wesentlichen alle im Markt befindlichen Applikationen und Services ermöglicht. Außerdem ermöglicht die verbesserte Mustererkennung ein schnelles Auffinden von Engpassbereichen des Systems.

Ein grundlegendes Merkmal der vorliegenden Erfindung ist die eingesetzte innovative Software-Roboter-Technik, die erkennt und handelt wie ein menschlicher Benutzer.

Die Firewall-ähnliche Funktion des ersten Softwaremoduls, die den Messablauf gegen äußere Einflüsse, insbesondere gegen Pop-ups oder dergleichen, schützt, sorgt bei geringem administrativem Aufwand für "saubere" Messwerte, so dass die Messungen ohne äußere Beeinflussung stabil und dauerhaft laufen.

Im Rahmen einer anderen Weiterbildung der vorliegenden Erfindung kann noch ein weiteres (viertes) Software-Modul vorgesehen sein, welches sich während der Messung automatisch um auftretende Applikationsprobleme kümmert und die Messungen gegebenenfalls selbsttätig neu startet. Auf diese Weise müssen so genannte Downtimes von Applikationen nicht bei den Messungen berücksichtigt werden. Mit anderen Worten: Die Software-Vorrichtung heilt sich selbst. Auch dieser Ansatz ermöglicht weniger administrativen Aufwand und bewirkt eine erhöhte Stabilität der Messungen.

Dabei kann vorgesehen sein, dass auch die Funktionalität des vorstehend beschriebenen weiteren Software-Moduls über den durch das zweite Software-Modul zur Verfügung gestellten grafischen Skript- oder Workflow-Editor zur Verfügung gestellt wird. Auf diese Weise lassen sich Messabläufe einfach und in sehr hoher Qualität erstellen, so dass sich kurze Time-to-market-Zyklen ergeben.

Die hauptsächlichen Einsatzbereiche der vorliegenden Erfindung sind die Servicelevel-Überwachung, das Service-Level-Reporting, das Bereitstellen eines Service-Level-Portals zur Darstellung der bestimmten Kenngrößen, die Überwachung von IT-Services, die Automatisierung von IT-Abläufen, das Durchführen von Performance-Analysen, die Produkt-/Software-Entwicklung, das Durchführen von Lasttests, die Kapazitätsplanung und das Accounting von IT-Services.

Weitere Eigenschaften und Vorteile der vorliegenden Erfindung ergeben sich aus der nachfolgenden Beschreibung von Ausführungsbeispielen anhand der Zeichnung.
- Figur 1: zeigt schematisch anhand eines Ablaufdiagramms die grundsätzli- chen Zusammenhänge, welche der vorliegenden Erfindung zugrun- de liegen;
- Figur 2: zeigt anhand eines kombinierten Blockschaltbilds und Ablaufdia- gramms eine bevorzugte Ausgestaltung der vorliegenden Erfin- dung;
- Figur 3: zeigt schematisch eine dezentrale Verwendung der vorliegenden Erfindung; und
- Figur 4: zeigt schematisch eine zentralisierte Verwendung der vorliegenden Erfindung.

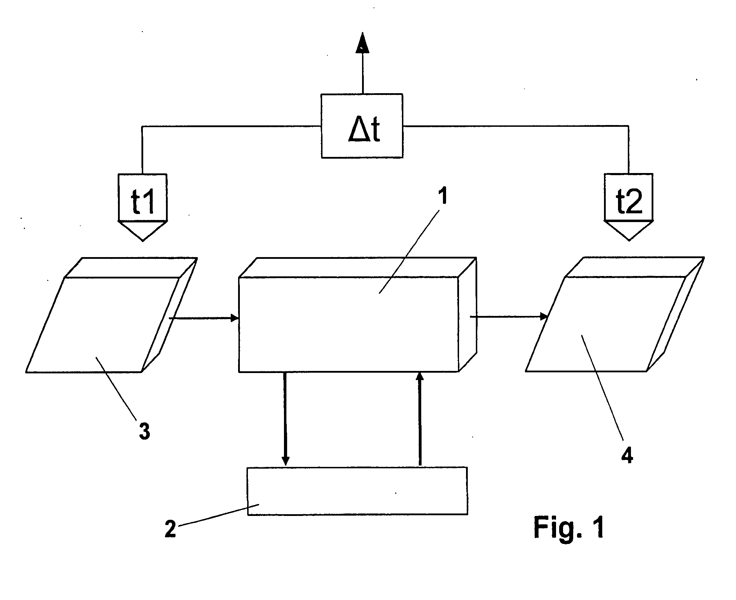

Anhand von Figur 1 sollen zunächst einige grundlegende Hintergrundinformationen zum Verständnis der vorliegenden Erfindung zur Verfügung gestellt werden.

Bei Bezugszeichen 1 ist ein Prozess oder eine Aktivität oder eine Leistung dargestellt, welche bzw. welcher in einem Computer- oder IT-System zu erbringen ist. Regelmäßig wird sich dabei um einen softwarebasierten Prozess oder dergleichen handeln, wobei die vorliegende Erfindung nicht auf eine bestimmte Art von Prozessen, Aktivitäten oder Leistungen beschränkt ist. Im einfachsten Fall kann es sich bei einem derartigen Prozess um das Aufrufen einer Software-Anwendung oder -Applikation handeln, so dass diese einem Benutzer zur Verfügung steht, beispielsweise das Starten eines Internet-Browsers und Öffnen eines entsprechenden Browser-Fensters verbunden mit einer Initialisierung der entsprechenden Kommunikationsverbindungen. Es kann sich jedoch auch um beliebig komplexe, zusammengesetzte Prozesse handeln, welche das Starten und Beenden verschiedener Applikationen mit zugehörigen Ein- und Ausgaben sowie das Einlesen und Speichern von Daten bzw. Dateien umfassen.

Bezugszeichen 2 symbolisiert ein entsprechendes Prozessziel, das heißt einen Endzweck oder ein Endergebnis der weiter oben beispielhaft aufgeführten Prozesse, Aktivitäten oder Leistungen 1. Beispielsweise kann das Prozessziel 2 darin bestehen, einem Nutzer eine fertig initialisierte Internetverbindung in einer gewissen, vorgegebenen Zeit zur Verfügung zu stellen. Wie bereits gesagt, ist die vorliegende Erfindung jedoch nicht auf ein bestimmtes, derartiges Prozessziel 2 beschränkt; allerdings wird regelmäßig eine Qualitätsanforderung an das IT-System mit dem Prozessziel verknüpft sein, wie vorstehend die einzuhaltende Maximalzeit, was vorliegend allgemein in Form einer zu erreichenden Kenngröße ausgedrückt ist.

Zum Auslösen des Prozesses 1 ist regelmäßig eine (Daten-)Eingabe 3 erforderlich, wie in Figur 1 dargestellt. Bei der Eingabe 3 kann es sich beispielsweise um eine Mauseingabe (Mausklick), eine Tastatureingabe oder dergleichen handeln. Das Erreichen des Prozessziels 2 wird durch eine entsprechende (Daten-)Ausgabe 4 angezeigt, beispielsweise durch Öffnen eines entsprechenden Anwendungsfensters auf einer Anzeigeeinheit des betreffenden Rechners, verbunden mit der genannten Qualitätsanforderung.

Zwischen der Eingabe 3 und der Ausgabe 4 vergeht eine gewisse Zeit Δt, welche angibt, wie lange der Rechner bzw. das IT-System zum Erreichen des Prozessziels 2 benötigt. Die Zeit Δt ergibt sich als Differenz t1-t2, wobei t1 den Zeitpunkt der Eingabe 3 und t2 den Zeitpunkt der Ausgabe 4 bezeichnet. Die Zeit Δt kann als Maß für die Qualität oder Leistungsfähigkeit des Rechners bzw. des IT-Systems im Sinne der oben genannten Qualitätsanforderung verwendet werden, wobei das Ansteigen von Δt über einen vorgegebenen Schwellwert als Hinweis auf Systemprobleme gewertet werden kann, beispielsweise bedingt durch Hardware- oder Softwarekonflikte, Überlastung, Fehlfunktionen einzelner Systemkomponenten oder dergleichen, ohne dass die vorstehende Aufzählung Anspruch auf Vollständigkeit erheben würde.

Wie der entsprechende Pfeil in Figur 1 symbolisiert, kann die gemessene Zeit oder Zeitdifferenz Δt zur Bestimmung einer entsprechenden Kenngröße für die Qualität oder Leistungsfähigkeit des Systems verwendet und entsprechend bereit gestellt werden, beispielsweise zum Generieren entsprechender Reports oder dergleichen.

Im Rahmen der vorliegenden Erfindung wird insbesondere bei der Bestimmung der Zeitdifferenz Δt in innovativer Weise eine besondere Art der Bildverarbeitung in Form einer Mustererkennung eingesetzt, um die Bestimmung plattform- bzw. betriebssystemunabhängig sowie sicher und schnell durchführen zu können.

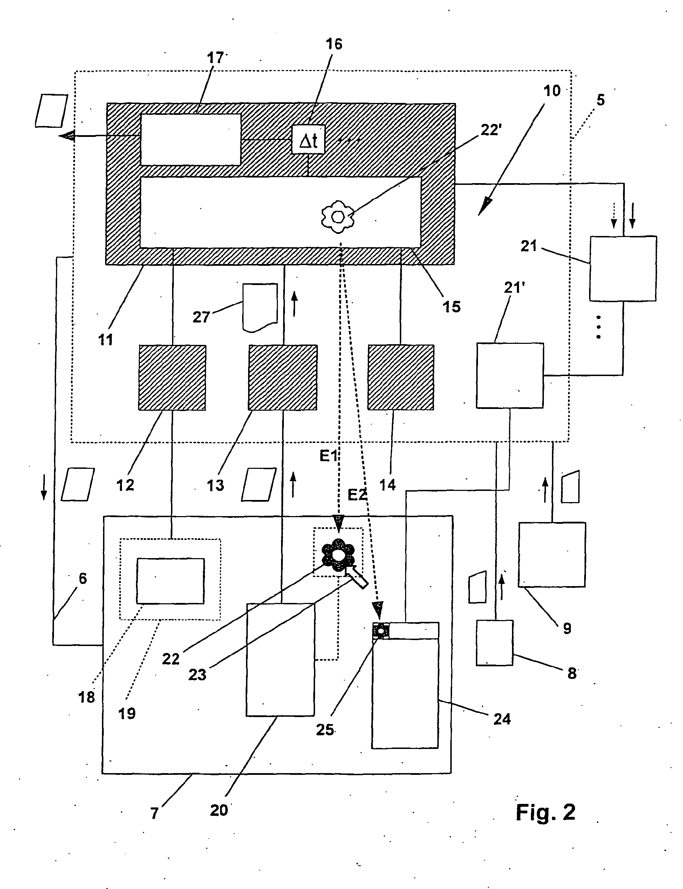

Zur Erläuterung dieses Sachverhalts zeigt Figur 2 ein detailliertes Blockschaltbild einer möglichen Ausgestaltung der vorliegenden Erfindung.

Nachfolgend werden zunächst die dargestellten Hardware- und Softwarekomponenten des Systems gemäß Figur 2 beschrieben; anschließend folgt eine detaillierte Beschreibung der funktionalen Zusammenhänge und Abläufe.

Bezugszeichen 5 bezeichnet einen Rechner, welcher Teil eines größeren Rechnerverbunds oder IT-Systems sein kann, was in Figur 2 nicht explizit dargestellt ist. Der Rechner 5 steht über eine Verbindung 6 in signaltechnischer Wirkverbindung mit einer Anzeigeeinheit 7, bei der es sich insbesondere um einen Bildschirm oder Monitor bzw. auch direkt um eine entsprechende Grafikkarte handeln kann, was in Figur 2 nicht explizit unterschieden wird. Mit dem Rechner 5 sind vorliegend zwei Eingabegeräte zum Eingeben von Daten in den Rechner 5 verbunden, nämlich eine Maus 8 und eine Tastatur 9, ohne dass die Erfindung auf das Vorhandensein derartiger Eingabegeräte beschränkt wäre. Insbesondere kann auch der Bildschirm 7 selbst als Eingabegerät ausgebildet sein, beispielsweise in Form eines Touchscreens oder dergleichen.

Der Rechner 5 weist eine softwarebasierte Vorrichtung 10 auf, welche die in Figur 2 schraffiert dargestellten Komponenten beinhaltet, nämlich einen so genannten Software-Roboter 11 sowie erste bis dritte Software-Module 12, 13, 14, welche mit dem Software-Roboter 11 in signaltechnischer Wirkverbindung stehen. Wie der Fachmann erkennt, handelt es sich bei der Software-Vorrichtung 10 grundsätzlich um Programmanweisungen, die zur Ausführung auf geeigneten, aus Gründen der Übersichtlichkeit nicht explizit dargestellten Prozessormitteln des Rechners 5 vorgesehen sind. Selbstverständlich weist der Rechner 5 zu diesem Zweck typischerweise noch geeignete Speichermittel für die genannten Programmanweisungen auf, welche in Figur 2 aus Gründen der Übersichtlichkeit ebenfalls nicht dargestellt sind.

Die genannten Programmanweisungen werden dem Rechner 5 in Form entsprechender Programmdaten zur Verfügung gestellt bzw. auf dem Rechner 5 installiert, wobei die Programmdaten entweder auf einem geeigneten Datenträger, wie einer CD-ROM oder dergleichen, gespeichert sein können oder wobei die genannten Daten körperlos über eine Kommunikationsverbindung, wie ein Intranet oder das Internet, zur Verfügung gestellt werden können. In jedem Fall bilden die genannten Daten ein Computerprogrammprodukt zum Schaffen der Software-Vorrichtung 10 auf einem geeigneten Rechner 5.

Der bereits angesprochene Software-Roboter 11 umfasst gemäß Figur 2 zumindest die nachstehend genannten weiteren Komponenten, nämlich eine Mustererkennungseinheit 15, auf die weiter unten noch ausführlich eingegangen wird, eine Anzahl von softwarebasierten Zeitmesseinheiten (Software-Timer) 16 in Wirkverbindung mit einem Report-Modul 17, wobei hier die Bestandteile 16 und 17 gerade die weiter oben anhand der Figur 1 bereits eingehend beschriebenen Funktionalitäten der Ermittlung von Δt und deren Verfügbarmachung außerhalb des Rechners 5 gewährleisten, worauf weiter unten noch genauer eingegangen wird.

Bei dem ersten Software-Modul 12 handelt es sich um ein Mittel zum Überwachen der Anzeigeeinheit 7 auf unerwünschte Programmfenster, d. h. so genannte Pop-Ups 18, worauf weiter unten noch genauer eingegangen wird. Um die Überwachungsfunktion des Software-Moduls 12 zu symbolisieren, ist in Figur 2 eine Verbindung zu einem entsprechenden Überwachungsbereich 19 in bzw. auf der Anzeigeeinheit 7 dargestellt, wobei der Bereich 19 selbstverständlich die gesamte Anzeigeeinheit 7 umfassen kann.

Das zweite Software-Modul 13 dient zum Bereitstellen eines grafischen Editor-Werkzeugs 20 in bzw. auf der Anzeigeeinheit 7. Auf dessen Funktion wird ebenfalls weiter unten noch genauer eingegangen.

Das dritte Software-Modul 14 stellt insbesondere dynamisch Einflussgrößen für die Mustererkennungseinheit 15 zur Verfügung, worauf ebenfalls weiter unten noch genauer eingegangen wird.

Bei Bezugszeichen 21 ist eine beliebige Software-Applikation dargestellt, die in der Regel nicht auf dem Rechner 5 sondern auf einem (entfernten) Anwendungs- oder Applikationsserver ausgeführt wird. Der Rechner 5 dient mit seiner Anzeigeeinheit 7 und seinen Eingabegeräten 8, 9 somit lediglich als Client bzw. führt den Client-Teil 21' der Applikation 21 aus, beispielsweise einen Internet-Browser bei Webanwendungen. Allerdings ist die vorliegende Erfindung grundsätzlich nicht darauf beschränkt, dass ein Teil der Applikations-Software auf einem anderen Rechner als dem Rechner 5 ausgeführt wird.

Zum Starten der Applikation 21, 21' auf dem Anwendungsserver bzw. dem Computer 5 ist in bzw. auf der Anzeigeeinheit 7 ein entsprechendes Piktogramm oder Icon 22 hinterlegt, welches eine entsprechende Verknüpfung aufweist, wie dem Fachmann bekannt ist. So kann durch Anwählen bzw. Anklicken des Piktogramms 22, beispielsweise mittels des Mauszeigers 23, die entsprechende Applikation 21, 21' gestartet werden, wofür sich der Benutzer des Computers 5 entsprechend des Mauseingabegeräts 8 bedient. Wenn die Applikation 21, 21' entsprechend gestartet und initialisiert wurde und somit für den Benutzer verfügbar ist, erscheint auf bzw. in der Anzeigeeinheit 7 ein entsprechendes Anwendungsfenster 24, welches ebenfalls ein der Applikation 21, 21' zugeordnetes Piktogramm 25 aufweist, wobei es sich bei dem Piktogramm 22 und dem Piktogramm 25 vorzugsweise im Wesentlichen um dasselbe Piktogramm handelt, wie dargestellt.

Unter zusätzlicher Bezugnahme auf die Figur 1 soll vorliegend die Zeit Δt = t1-t2 als Maß für das angestrebte Prozessziel 2 (vgl. Figur 1) angesehen werden, nämlich das Verfügbarmachen der Applikation 21, 21' durch Anzeigen des Anwendungsfensters 24. Mit anderen Worten: Die Zeit Δt ist diejenige Zeit, die zwischen einem Anklicken des Piktogramms 22 und dem Erscheinen des Anwendungsfensters 24 in bzw. auf der Anzeigeeinheit 7 des Rechners 5 vergeht. Die Zeit Δt wird als Maß für die Qualität oder Leistungsfähigkeit des IT-Systems angesehen, welches vorliegend zumindest den Rechner 5 und denjenigen Anwendungsserver,umfasst, auf welchem die Applikation 21 ausgeführt wird. Die Zeit Δt kann dabei als Kenngröße für das IT-System angesehen werden; alternativ lässt sich eine solche aus der Messung von Δt ableiten.

Beim Bestimmen der Zeit Δt wird folgendermaßen verfahren: Durch das zweite Software-Modul 13 wird auf bzw. in der Anzeigeeinheit 7 das bereits erwähnte grafische Editor-Werkzeug 20 bereitgestellt, welches es dem Benutzer ermöglicht, die für die geplante Messung von Δt notwendigen Abläufe in einfacher Weise nach dem so genannten Drag-and-Drop-Prinzip zu programmieren. Auf diese Weise werden beispielsweise die notwendigen Timer 16 definiert und initalisiert. Weiterhin beinhaltet die Arbeit mit dem grafischen Editor-Werkzeug 20 das Definieren eines Bereichs 26 in bzw. auf der Anzeigeeinheit 7, in welchem sich das anzuklickende Piktogramm 22 befindet. Der genannte Bereich 26 wird mit Hilfe des Mauszeigers 23 bzw. des Eingabegeräts 8 vorgegeben. Die entsprechenden Daten werden von dem grafischen Editor-Werkzeug 20 zu dem Software-Modul 13 übertragen, welches daraus ein entsprechendes Skript 27 für den Software-Roboter 11 erzeugt.

Vorliegend enthält das Skript 27 insbesondere die Anweisungen, den Timer 16 zu initialisieren und anschließend die Applikation 21, 21' durch Anklicken des Piktogramms 22 zu starten, was mit einem Aktivieren des Timers 16 einher geht (Zeitpunkt t1 in Figur 1). Das Suchen bzw. Auffinden des Piktogramms 22 in der bzw. auf der Anzeigeeinheit 7 erfolgt mittels der Mustererkennungseinheit 15 des Software-Roboters 11.

Die Mustererkennungseinheit 15 ist dazu ausgebildet, eine konturabhängige Mustererkennung in bzw. auf der Anzeigeeinheit 7 vorzunehmen. Konturabhängige Mustererkennung bedeutet in diesem Zusammenhang - wie bereits oben erwähnt -, dass nicht nach dem Piktogramm 22 selbst, das heißt zum Beispiel nach den entsprechenden Bildpunkten oder Pixeln im RGB-Farbraum gesucht wird, sondern dass die Mustererkennungseinheit 15 versucht, die Kantenstruktur oder Kontur des Piktogramms 22 in bzw. auf der Anzeigeeinheit 7 zu finden. In Figur 2 ist die Kontur des Piktogramms 22 in der Mustererkennungseinheit 15 bei Bezugszeichen 22' dargestellt, wobei angemerkt sei, dass es sich bei der Struktur 22' aus darstellungstechnischen Gründen strenggenommen um das Negativ der entsprechenden Kantenstruktur handelt.

Diese Vorgehensweise hat den entscheidenden Vorteil, dass ein Auffinden des Piktogramms 22 quasi unabhängig von der verwendeten Rechnerplattform sowie von der Art und Qualität der Anzeigeeinheit 7, beispielsweise deren Auflösung und/oder dem Alter der eingesetzten Grafikkarte, möglich wird.

Mittels des dritten Software-Moduls 14 lassen sich Einflussgrößen der Mustererkennung, wie Kantenschärfe oder dergleichen, insbesondere dynamisch vorgeben, beispielsweise aber auch über das Eingabegerät 9 durch den Benutzer.

Zweckmäßigerweise erfolgt die Suche nach dem Piktogramm 22 ausschließlich bzw. zunächst in einem vorgegebenen Bereich der Anzeigeeinheit 7, welcher insbesondere mit dem bereits genannten Bereich 26 zusammenfallen kann, ohne dass die Erfindung jedoch hierauf beschränkt wäre. Es kann auch vorkommen, dass das Piktogramm 22 seine Position in bzw. auf der Anzeigeeinheit 7 seit der Definition des Bereichs 26 verändert hat, beispielsweise durch Verschieben seitens des Benutzers. In diesem Fall erstreckt sich die Suche nach dem Piktogramm 22 entsprechend über den Restbereich der Anzeigeeinheit 7, insbesondere durch sukzessives Scannen der Anzeigeeinheit 7, bis das Piktogramm 22 gefunden wurde, oder heuristisch-bereichsweise, wie beispielsweise von Datenbanksuchvorgängen her bekannt.

Nach entsprechender Aktivierung des Timers 16 überprüft der Software-Roboter 11 bzw. dessen Mustererkennungseinheit 15 in kurzen, regelmäßigen Abständen, ob in bzw. auf der Anzeigeeinheit 7 das Piktogramm 25 auftaucht, welches gemäß der Darstellung in Figur 1 exemplarisch das Erreichen des Prozessziels 2 angibt. Auch in diesem Zusammenhang erfolgt die Mustererkennung durch die Mustererkennungseinheit 15 konturabhängig, das heißt anhand eines entsprechenden Kantenbilds (vgl. Bezugszeichen 22' in Figur 2).

Auch in diesem Fall kann der Suchvorgang primär auf einen vorbestimmten Teilbereich der Anzeigeeinheit 7 beschränkt sein, um das Piktogramm 25 entsprechend schneller aufzufinden.

Die vorstehend beschriebenen Such- und Auffindevorgänge der Piktogramme 22, 25 durch die Mustererkennungseinheit 15 sind in Figur 2 durch gestrichelte Pfeile E1 bzw. E2 symbolisiert. Sobald das Piktogramm 25 erkannt bzw. gefunden wurde, stoppt die Mustererkennungseinheit 15 den Timer 16 (Zeitpunkt t2 in Figur 1), so dass durch den Zählerwert des Timers 16 die Zeit Δt bestimmt ist und entsprechend an das Report-Modul 17 zur weiteren Verwendung innerhalb des IT-Systems ausgegeben werden kann, insbesondere zum Ermitteln einer (abgeleiteten) Kenngröße.

Während der vorstehend beschriebenen Abläufe sorgt das erste Software-Modul 12 dafür, dass die Zeitmessung durch den Timer 16 nicht durch das Auftauchen von Pop-Ups 18 gestört oder verfälscht wird. Auch das Erkennen von Pop-Ups 18 durch das erste Software-Modul 12 erfolgt durch den Einsatz der Mustererkennungseinheit 15 des Software-Roboters 11, wie durch die entsprechenden Verbindungen in Figur 2 symbolisiert.

Die Software-Vorrichtung 10 kann weitere Software-Module umfassen, die in Figur 2 nicht explizit dargestellt sind. Beispielsweise kann ein weiteres derartiges Software-Modul zum Durchführen eines Error-Handlings vorgesehen sein, so dass beispielsweise Ausfallzeiten der Applikation 21, das heißt Zeiten, zu welchen die genannte Applikation in dem IT-System gar nicht zur Verfügung steht, bei der Zeitmessung durch den Timer 16 unberücksichtigt bleiben, wenn sie für die Bestimmung der Qualität oder Leistungsfähigkeit des Systems unerheblich sind. Auf diese Weise kann die gewünschte Leistungsmessung trotz Fehlern oder Störungen im System wie geplant automatisiert ablaufen.

Wenn das Piktogramm 22 - wie oben bereits erwähnt - in bzw. auf der Anzeigeeinheit 7 verschoben wurde, merkt sich der Software-Roboter 11 nach erfolgter Erkennung durch die Mustererkennungseinheit 15 vorzugsweise die neue Position des Piktogramms 22 und beginnt eine nachfolgende Suche zweckmäßigerweise in diesem neuen Bereich.

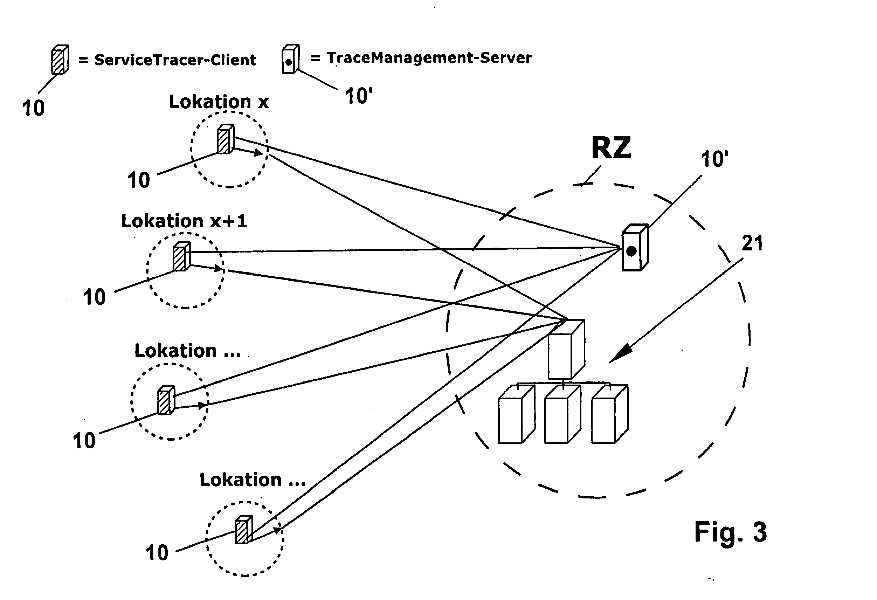

Figur 3 zeigt schematisch eine erste systemtechnische Realisierung des erfindungsgemäßen Verfahrens bzw. eine entsprechende Verwendung der weiter oben anhand von Figur 2 ausführlich beschriebenen erfindungsgemäßen Software-Vorrichtung 10.

Die in Figur 3 gezeigte Ausgestaltung eignet sich insbesondere für den Systemaufbau bei größeren Lokationen. Dabei sind die einzelnen Software-Vorrichtungen 10, vorliegend auch als ServiceTracer-Client (STC) bezeichnet, lokal an den einzelnen Lokationen x, x+1, ... vorhanden und stehen jeweils über ein Daten- bzw. Kommunikationsnetz in signaltechnischer Wirkverbindung mit einem entsprechenden Server 10' (TraceManagement-Server, TMS), der in einem von den einzelnen Lokationen x, x+1, ... räumlich getrennten Rechenzentrum RZ angeordnet ist. Letzteres umfasst weiterhin Applikationssysteme oder allgemein Applikationen 21 (vgl. Figur 2), auf welche von den einzelnen Lokationen x, x+1, ... und entsprechend von den dort vorhandenen STCs 10 zugegriffen wird, um die Servicequalität bzw. Leistungsfähigkeit vor Ort an den jeweiligen Lokationen x, x+1, ... zu überwachen.

Der zentrale TMS 10' läuft dezidiert im Rechenzentrum RZ und beinhaltet insbesondere eine zentrale Steuereinheit (ControlCenter) sowie eine Report- und eine Alarmierungsfunktion.

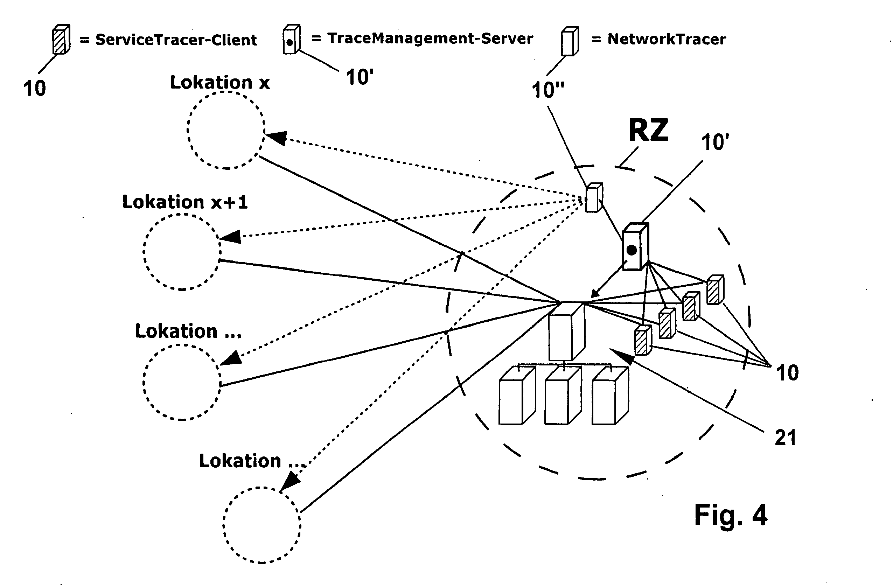

Figur 4 zeigt eine alternative Systemausgestaltung, welche sich insbesondere für kleinere Lokationen eignet. Anders als beim Gegenstand der Figur 3 sind bei der Ausgestaltung gemäß Figur 4 die STCs 10 im Rechenzentrum RZ angeordnet und führen dort die entsprechenden Messungen an den Applikationssystemen 21 durch. Zu diesem Zweck stehen die STCs 10 einerseits in Wirkverbindung mit den Applikationssystemen 21 und andererseits mit dem TMS 10'. Weiterhin ist in dem Rechenzentrum RZ zusätzlich noch eine weitere Komponente 10" in Form eines so genannten NetworkTracers (NWT) vorgesehen, welche End-to-end-Verbindungen zu den einzelnen Lokationen x, x+1 ... aufbaut, um im Rahmen der vorliegenden Erfindung dort entsprechende Qualitätsmessungen der Netzwerkstrecken vorzunehmen.

Wie der Fachmann erkennt, lassen sich die Ausgestaltungen gemäß Figur 3 und Figur 4 auch kombinieren, so dass eine Anzahl von STCs 10 an den Lokationen die Servicequalität vor Ort überwachen, während andererseits eine Anzahl von STCs 10 im Rechenzentrum RZ die Qualität nach Art einer Referenzmessung zusätzlich überwachen. In allen diesen Fällen arbeitet zumindest eine Anzahl der eingesetzten STCs 10, wie weiter oben anhand von Figur 1 und Figur 2 detailliert beschrieben.

Die STCs 10 melden frühzeitig Engpässe der Applikationen bzw. Applikationssysteme 21, so dass diese schneller erkannt und für die User vermieden werden können, was zu entsprechenden Kosteneinsparungen führt.

Der NWT 10" (vgl. Figur 4) überwacht end-to-end, d. h. über die gesamte Verbindungsstrecke zwischen Ausgangspunkt (origin) und Ziel (destination) die Netzwerk-Qualitäten zu allen Lokationen x, x+1, ..., so dass Problemsuchzeiten verkürzt und Engpässe entsprechend frühzeitig erkannt werden können.

Der TMS 10' steuert die dezentralen STCs und NWTs, speichert die entsprechend gewonnen Daten, erstellt Alarme, wertet die Daten gemäß bestimmter Service Level Agreements (SLA) oder Dienstgütevereinbarungen (DGV) im Hinblick auf die genannten Kenngrößen aus und erstellt zielgruppenorientierte Reports, welche über ein (nicht explizit dargestelltes) Webportal abrufbar sein können.

Ein Kernstück ist dabei in jedem Fall die durch die Software-Vorrichtung (STC) 10 insbesondere gemäß Figur 2 ermöglichte plattform-, farb- und auflösungsunabhängige Hochgeschwindigkeits-Bilderkennung, welche im Rahmen der vorliegenden Erfindung in neuartiger Weise das Bedienen aller im Markt befindlichen Applikationen ermöglicht.

## Patentansprüche

1. Verfahren zum Bestimmen der Qualität oder Leistungsfähigkeit von IT-Systemen auf Applikationsebene, wobei wenigstens eine Applikation (21, 21') auf mindestens einem Rechner (5) des Systems gestartet wird, **dadurch gekennzeichnet, dass**
eine Zeit (Δt) zwischen dem Starten der Applikation (21, 21') und dem Erreichen eines bestimmten Applikationszustandsermittelt und als Maß für die Quatität oder Leistungsfähigkeit des IT-Systems ausgegeben oder ausgewertet wird, wobei zumindest das Starten der Applikation (21, 21') und die Messung der Zeit (Δt) automatisierbar durch einen Software-Roboter (11) erfolgt, welcher die Applikation (21, 21') grafisch anhand eines ihr zugeordneten ersten Piktogramms (22) identifiziert und durch Anwahl einer dem ersten Piktogramm (22) zugeordneten Verknüpfung startet, wodurch zugleich die Messung der Zeit (Δt) ausgelöst wird, wobei die Identifizierung mittels einer konturabhängigen Mustererkennung erfolgt, zu welchem Zweck das erste Piktogramm (22) zunächst in eine Kontur- oder Kantenbilddarstellung (22') umgewandelt wird, unter dessen Verwendung anschließend die Mustererkennung durchgeführt wird, und dass das Erreichen des bestimmten Applikationszustands grafisch anhand eines dem Applikationszustand zugeordneten zweiten Piktogramms (25) erkannt wird, wobei die Identifizierung des zweiten Piktogramms (25) ebenfalls mittels einer konturabhängigen Mustererkennung durch den Software-Roboter (11) erfolgt, wobei nach erfolgter Identifizierung des zweiten Piktogramms (25) die Messung der Zeit (Δt) durch den Software-Roboter (11) gestoppt wird.

2. Verfahren nach Anspruch 1, **dadurch gekennzeichnet, dass** der Software-Roboter (11) mit einem ersten Software-Modul (12) zusammenwirkt, welches die Anzeige visueller Elemente in Form von Pop-ups (18) durch von der gestarteten Applikation (21, 21') verschiedene weitere Computerprogramme unterbindet.

3. Verfahren nach Anspruch 2, **dadurch gekennzeichnet, dass** die Pop-ups (18) mittels eines Bilderkennungsverfahrens erkannt werden.

4. Verfahren nach einem der vorhergehenden Ansprüche, **dadurch gekennzeichnet, dass** die Mustererkennung anhand einer vorbekannten Position des Piktogramms (22, 25) zunächst in einem beschränkten, vorgegebenen Bereich (26) einer Anzeigeeinheit (7) des Rechners (5) durchgeführt wird.

5. Verfahren nach Anspruch 4, **dadurch gekennzeichnet, dass** die Mustererkennung bei Nichterkennen des Piktogramms (22, 25) an der vorbekannten Position (26) anschließend heuristisch über den Restbereich der Anzeigeeinheit (7) des Rechners (5) durchgeführt wird.

6. Verfahren nach Anspruch 5, **dadurch gekennzeichnet, dass** im Falle einer erfolgreichen Mustererkennung die neue Position des Piktogramms (22, 25) für nachfolgende Musterkennungen desselben Piktogramms gespeichert wird.

7. Verfahren nach einem der vorhergehenden Ansprüche, **dadurch gekennzeichnet, dass** der Software-Roboter (11) eine Anzahl von Applikationen (21, 21') in einer vorbestimmten Abfolge startet und optional zum Erreichen des bestimmten Applikationszustands in den gestarteten Applikationen (21, 21') vorbestimmte Eingaben oder Anweisungen tätigt, wobei die Qualität und/oder Leistungsfähigkeit des IT-Systems bestimmt und protokolliert wird.

8. Verfahren nach Anspruch 7, **dadurch gekennzeichnet, dass** der Software-Roboter (11) nach Maßgabe von Skriptanweisungen handelt, wobei das entsprechende Skript (27) unter Verwendung eines zweiten Software-Moduls (13) in Form eines grafischen Skript-Editors (20) erzeugt wird.

9. Verfahren nach einem der vorhergehenden Ansprüche, **dadurch gekennzeichnet, dass** zu erkennende Piktogramme (22, 25) und entsprechende Bereiche der Anzeigeeinheit (7) des Rechners (5) am Bildschirm festgelegt werden.

10. Verfahren nach Anspruch 8 und Anspruch 9, **dadurch gekennzeichnet, dass** die am Bildschirm festgelegten Bereiche der Anzeigeeinheit (7) in das Skript (27) eingebunden werden.

11. Verfahren nach einem der vorhergehenden Ansprüche, **dadurch gekennzeichnet, dass** der Software-Roboter (11) mit einem dritten Software-Modul (14) zusammenwirkt, welches eine Anpassung von Einflussgrößen der Mustererkennung vornimmt, um eine gewisse, beabsichtigte Unschärfe bei der Mustererkennung zuzulassen.

12. Computerprogrammprodukt in Form von auf einem Datenträger gespeicherten oder speicherbaren Programmanweisungen, bei deren Ausführung auf einer geeigneten Rechnerarchitektur (5) das Verfahren nach einem der vorhergehenden Ansprüche durchgeführt wird, wobei die Programmanweisungen eines oder mehrere der nachfolgend aufgeführten Software-Elemente programmtechnisch definieren: den Software-Roboter (11), das erste Software-Modul (12), das zweite Software-Modul (13) und das dritte Software-Modul (14).

13. Softwarebasierte Vorrichtung (10) zum Bestimmen der Qualität oder Leistungsfähigkeit von IT-Systemen auf Applikationsebene, wobei die Vorrichtung (10) dazu ausgebildet ist, wenigstens eine Applikation (21, 21') auf mindestens einem Rechner (5) des Systems zu starten,
**dadurch gekennzeichnet, dass**
die Vorrichtung (10) weiterhin dazu ausgebildet ist, eine Zeit (Δt) zwischen dem Starten der Applikation (21, 21') und dem Erreichen eines bestimmten Applikationszustands zu ermitteln und als Maß für die Qualität oder Leistungsfähigkeit des IT-Systems auszugeben oder auszumerten wobei die Vorrichtung (10) einen Software-Roboter (11) zum automatisierbaren Starten der Applikation (21, 21') und der Zeitmessung umfasst, welcher Software-Roboter (11) dazu ausgebildet ist, die Applikation (21, 21') grafisch anhand eines ihr zugeordneten Piktogramms (22) zu identifizieren und durch Anwahl einer dem Piktogramm (22) zugeordneten Verknüpfung zu starten, wodurch zugleich die Messung der Zeit (Δt) ausgelöst wird, wobei für die Identifizierung eine konturabhängige Mustererkennung (15) durch den Software-Roboter (11) implementiert ist, welche die Umwandlung des ersten Piktogramms (22) in eine Kontur- oder Kantenbilddarstellung (22') umfasst, unter dessen Verwendung anschließend die Mustererkennung durchgeführt wird, welcher Software-Roboter (11) weiterhin dazu ausgebildet ist, das Erreichen des bestimmten Applikationszustands grafisch anhand eines dem Applikationszustand zugeordneten zweiten Piktogramms (25) zu erkennen, wobei auch für die Identifizierung des zweiten Piktogramms (25) eine konturabhängige Mustererkennung (15) durch den Software-Roboter (11) implementiert ist, und nach erfolgter Identifizierung des zweiten Piktogramms (25) die Messung der Zeit (Δt) zu stoppen.

14. Vorrichtung (10) nach Anspruch 13, **dadurch gekennzeichnet, dass** die Vorrichtung (10) dezentral auf wenigstens einem zu überwachenden Rechner (5) installiert ist.

15. Vorrichtung (10) nach Anspruch 13 oder 14, **dadurch gekennzeichnet, dass** die Vorrichtung (10) zentral auf wenigstens einem übergeordneten Rechner installiert ist, der mit wenigstens einem zu überwachenden Rechner (5) in Kommunikationsverbindung steht.

## Claims

1. Method of determining the quality or performance of IT systems on an application level, at least one application (21, 21') being started on at least one computer (5) of the system,
**characterised in that**
a time (Δt) between starting the application (21, 21') and reaching a certain application state is determined and is output or evaluated as a measure of the quality or performance of the IT system, at least the starting of the application (21, 21') and the measurement of the time (Δt) being effected automatically by a software robot (11) which identifies the application (21, 21') graphically by reference to a first icon (22) assigned thereto and starts the application by selecting a link assigned to the first icon (22), as a result of which the measurement of the time (Δt) is initiated at the same time, the identification being effected by means of contour-dependent pattern recognition, for which purpose the first icon (22) is first converted into a contour image or edge image (22') which is then used to perform the pattern recognition, and that reaching the certain application state is recognised graphically by reference to a second icon (25) assigned to the application state, the identification of the second icon (25) likewise being effected by means of contour-dependent pattern recognition by the software robot (11), the measurement of the time (Δt) being stopped by the software robot (11) once the second icon (25) has been identified.

2. Method according to claim 1, **characterised in that** the software robot (11) co-operates with a first software module (12) which prevents the display of visual elements in the form of pop-ups (18) by further computer programs other than the started application (21, 21').

3. Method according to claim 2, **characterised in that** the pop-ups (18) are recognised by means of an image recognition process.

4. Method according to any one of the preceding claims, **characterised in that** the pattern recognition is performed first in a limited, prespecified region (26) of a display unit (7) of the computer (5) by reference to a previously known position of the icon (22, 25).

5. Method according to claim 4, **characterised in that**, if the icon (22, 25) is not recognised at the previously known position (26), pattern recognition is then performed heuristically over the remaining region of the display unit (7) of the computer (5).

6. Method according to claim 5, **characterised in that** in the case of successful pattern recognition the new position of the icon (22, 25) is stored for subsequent pattern recognitions in respect of the same icon.

7. Method according to any one of the preceding claims, **characterised in that** the software robot (11) starts a number of applications (21, 21') in a predetermined sequence and optionally executes inputs or instructions that have been predetermined in the started applications (21, 21') to reach a certain application state, the quality and/or performance of the IT system being determined and logged.

8. Method according to claim 7, **characterised in that** the software robot (11) acts in accordance with script instructions, the script (27) in question being generated using a second software module (13) in the form of a graphic script editor (20).

9. Method according to any one of the preceding claims, **characterised in that** icons (22, 25) to be recognised and corresponding regions of the display unit (7) of the computer (5) are specified on the monitor.

10. Method according to claim 8 and claim 9, **characterised in that** the regions of the display unit (7) specified on the monitor are incorporated into the script (27).

11. Method according to any one of the preceding claims, **characterised in that** the software robot (11) co-operates with a third software module (14) which effects matching of influencing variables of the pattern recognition in order to allow a certain, intentional fuzziness in the pattern recognition.

12. Computer program product in the form of program instructions stored or storable on a data storage medium, in which, when carried out on a suitable computer architecture (5), the method according to any one of the preceding claims is carried out, the program instructions defining, in program terms, one or more of the following software elements: the software robot (11), the first software module (12), the second software module (13) and the third software module (14).

13. Software-based device (10) for determining the quality or performance of IT systems on an application level, the device (10) being arranged to start at least one application (21, 21') on at least one computer (5) of the system,
**characterised in that**
the device (10) is also arranged to determine a time (Δt) between starting the application (21, 21') and reaching a certain application state and to output or evaluate that time as a measure of the quality or performance of the IT system, the device (10) comprising a software robot (11) for automatically starting the application (21, 21') and the time measurement, which software robot (11) is arranged to identify the application (21, 21') graphically by reference to an icon (22) assigned thereto and to start the application by selecting a link assigned to the icon (22), as a result of which the measurement of the time (Δt) is initiated at the same time, there being implemented, for the identification, contour-dependent pattern recognition (15) by the software robot (11) which comprises converting the first icon (22) into a contour image or edge image (22') which is then used to perform the pattern recognition, which software robot (11) is also arranged to recognise graphically, by reference to a second icon (25) assigned to the application state, that the certain application state has been reached, contour-dependent pattern recognition (15) by the software robot (11) being implemented also for the identification of the second icon (25), and to stop the measurement of the time (Δt) once the second icon (25) has been identified.

14. Device (10) according to claim 13, **characterised in that** the device (10) is installed decentralised on at least one computer (5) to be monitored.

15. Device (10) according to claim 13 or 14, **characterised in that** the device (10) is installed centralised on at least one higher-level computer which is in communicative connection with at least one computer (5) to be monitored.

## Revendications

1. Procédé pour déterminer la qualité ou les performances de systèmes informatiques au niveau application, dans lequel au moins une application (21, 21') est démarrée sur au moins un ordinateur (5) du système,
**caractérisé en ce que**
un temps (Δt) entre le démarrage de l'application (21, 21') et l'atteinte d'un état défini de l'application est déterminé et délivré ou évalué en tant que mesure de la qualité ou des performances du système informatique, au moins le démarrage de l'application (21, 21') et la mesure du temps (Δt) pouvant être automatisés par un robot logiciel (11) qui identifie l'application (21, 21') graphiquement à l'aide d'un premier pictogramme (22) qui lui est associé et la démarre par sélection d'une opération associée au premier pictogramme (22), ce qui déclenche en même temps la mesure du temps (Δt), l'identification ayant lieu au moyen d'une reconnaissance de motif dépendante du contour, en vue de quoi le premier pictogramme (22) est d'abord converti en une représentation de contour ou de lisière (22') à l'aide de laquelle la reconnaissance de motif est ensuite effectuée, et que l'atteinte de l'état défini de l'application est reconnue graphiquement à l'aide d'un second pictogramme (25) associé à l'état de l'application, l'identification du second pictogramme (25) ayant également lieu au moyen d'une reconnaissance de motif dépendante du contour par le robot logiciel (11), la mesure du temps (Δt) étant arrêtée par le robot logiciel (11) après identification du second pictogramme (25).

2. Procédé selon la revendication 1, **caractérisé en ce que** le robot logiciel (11) coopère avec un premier module logiciel (12) qui empêche l'affichage d'éléments visuels sous la forme de pop-ups (18) par d'autres programmes d'ordinateur différents de l'application démarrée (21, 21').

3. Procédé selon la revendication 2, **caractérisé en ce que** les pop-ups (18) sont reconnus au moyen d'un procédé de reconnaissance d'images.

4. Procédé selon une des revendications précédentes, **caractérisé en ce que** la reconnaissance de motif est effectuée au moyen d'une position connue du pictogramme (22, 25) d'abord dans une zone prédéfinie limitée (26) d'une unité d'affichage (7) de l'ordinateur (5).

5. Procédé selon la revendication 4, **caractérisé en ce qu'**en cas de non-reconnaissance du pictogramme (22, 25) à la position connue (26), la reconnaissance de motif est ensuite effectuée heuristiquement sur la zone restante de l'unité d'affichage (7) de l'ordinateur (5).

6. Procédé selon la revendication 5, **caractérisé en ce qu'**en cas de reconnaissance de motif réussie, la nouvelle position du pictogramme (22, 25) est mémorisée pour les reconnaissances de motif ultérieures du même pictogramme.

7. Procédé selon une des revendications précédentes, **caractérisé en ce que** le robot logiciel (11) démarre une pluralité d'applications (21, 21') dans un ordre prédéterminé et effectue en option des entrées ou des instructions prédéterminées pour atteindre l'état d'application défini dans les applications démarrées (21, 21'), à l'occasion de quoi la qualité et/ou les performances du système informatique sont déterminées et enregistrées.

8. Procédé selon la revendication 7, **caractérisé en ce que** le robot logiciel (11) agit conformément à des scripts, le script (27) correspondant étant généré en utilisant un deuxième module logiciel (13) sous la forme d'un éditeur graphique de scripts (20).

9. Procédé selon une des revendications précédentes, **caractérisé en ce que** des pictogrammes (22, 25) à reconnaître et des zones correspondantes de l'unité d'affichage (7) de l'ordinateur (5) sont définis sur l'écran.

10. Procédé selon la revendication 8 et la revendication 9, **caractérisé en ce que** les zones de l'unité d'affichage (7) définies sur l'écran sont intégrées dans le script (27).

11. Procédé selon une des revendications précédentes, **caractérisé en ce que** le robot logiciel (11) coopère avec un troisième module logiciel (14) qui effectue une adaptation de grandeurs d'influence de la reconnaissance de motif pour permettre une certaine incertitude, intentionnelle, lors de la reconnaissance de motif.

12. Produit programme informatique sous la forme d'instructions de programme mémorisées ou mémorisables sur un support de données, lequel réalise le procédé selon une des revendications précédentes lors de son exécution sur une architecture d'ordinateur (5) appropriée, les instructions de programme définissant par technique de programmation un ou plusieurs des éléments logiciels mentionnés ci-après : le robot logiciel (11), le premier module logiciel (12), le deuxième module logiciel (13) et le troisième module logiciel (14).

13. Dispositif basé sur logiciel (10) pour déterminer la qualité ou les performances de systèmes informatiques au niveau application, le dispositif (10) étant conçu pour démarrer au moins une application (21, 21') sur au moins un ordinateur (5) du système,
**caractérisé en ce que**
le dispositif (10) est en outre conçu pour déterminer un temps (Δt) entre le démarrage de l'application (21, 21') et l'atteinte d'un état défini de l'application et le délivrer ou l'évaluer en tant que mesure de la qualité ou des performances du système informatique, le dispositif (10) comprenant un robot logiciel (11) pour le démarrage automatisable de l'application (21, 21') et de la mesure de temps, lequel robot logiciel (11) est conçu pour identifier l'application (21, 21') graphiquement à l'aide d'un premier pictogramme (22) qui lui est associé et la démarrer par sélection d'une opération associée au premier pictogramme (22), ce qui déclenche en même temps la mesure du temps (Δt), une reconnaissance de motif dépendante du contour (15) par le robot logiciel (11) étant implémentée pour l'identification, laquelle comprend la conversion du premier pictogramme (22) en une représentation de contour ou de lisière (22') au moyen de laquelle la reconnaissance de motif est ensuite effectuée, lequel robot logiciel (11) est en outre conçu pour reconnaître graphiquement l'atteinte de l'état défini de l'application à l'aide d'un second pictogramme (25) associé à l'état de l'application, une reconnaissance de motif dépendante du contour (15) par le robot logiciel (11) étant également implémentée pour l'identification du second pictogramme (25), et pour arrêter la mesure du temps (Δt) après identification du second pictogramme (25).

14. Dispositif (10) selon la revendication 13, **caractérisé en ce que** le dispositif (10) est installée de manière décentralisée sur au moins un ordinateur (5) à surveiller.

15. Dispositif (10) selon la revendication 13 ou 14, **caractérisé en ce que** le dispositif (10) est installée de manière centrale sur au moins un ordinateur maître qui est en liaison de communication avec au moins une ordinateur (5) à surveiller.
